# EUROPÄISCHE PATENTANMELDUNG

(11) **EP 2 045 350 A2**
(43) Veröffentlichungstag der Anmeldung: **08.04.2009**
(21) Anmeldenummer: 08017251.3
(22) Anmeldetag: 01.10.2008
(51) Int. Cl.: C23C 4/06, C23C 4/18, C23C 24/10, C23C 26/00, C23C 26/02, B23K 26/34, B23K 35/28, B23K 35/32, C22F 1/043

(54) **Verfahren zur Herstellung von Beschichtungen aus MMC und derartig beschichtete Bauteile**

(30) Priorität: 24.07.2008 DE 102008034399; 04.10.2007 DE 102007047603
(71) Anmelder: BPE International Dr. Hornig GmbH, 90542 Eckental (DE)
(72) Erfinder: Hornig, Wolfgang, Dr., 90542 Eckental (DE)
(74) Vertreter: Kaufmann, Sigfrid

(57) **Zusammenfassung**

Die Erfindung betrifft die Herstellung von Beschichtungen aus MMC mit einer Matrix aus Aluminium oder einer Aluminiumlegierung. Verfahrensgemäß beschichtete Bauteile zeichnen sich durch vielfältige Vorteile, namentlich höchste Härte sowie Elastizität und daraus resultierende hohe Verschleißfestigkeit, aus. Zur Herstellung der Beschichtungen werden Pulver, die sich aus Aluminium oder einer Aluminiumlegierung und 5 bis 30 Vol-% nichtmetallischen Partikeln, wie z.B. TiB₂ oder TiC, zusammensetzen, auf die Beschichtungsfläche aufgebracht, anschließend die 0,2 bis 5 mm dicken Beschichtungen abgeschreckt und diese schließlich einer Kalt-, Stufen- oder Warmauslagerung unterzogen. Zur Beschichtung geeignete Methoden sind das Plasmabeschichten, das Laserbeschichten, mikrometallurgische Beschichtungsmethoden oder das Laserlöten.

## Beschreibung

Die Erfindung betrifft die Herstellung von Beschichtungen aus MMC mit einer Matrix aus Aluminium oder einer Aluminiumlegierung. Verfahrensgemäß beschichtete Bauteile zeichnen sich durch vielfältige Vorteile, namentlich höchste Härte sowie Elastizität und daraus resultierende hohe Verschleißfestigkeit, aus.

MMC (metal matrix composites) sind Metallmatrix-Verbundwerkstoffe, die aus einer zusammenhängenden Matrix bestehen, in der nichtmetallisches Material eingebettet ist. Es ist bekannt, dass MMCs aus Aluminium oder einer Aluminiumlegierung sowie aus Keramikpartikeln generell hohe Verschleißfestigkeiten und Zähigkeiten besitzen.

Zur Herstellung verschleißfester Bauteile ist es meist ausreichend, nur die stark beanspruchten Bereiche mit einer verschleißfesten Beschichtung aus MMC zu versehen.

Eine Schwierigkeit bei der Herstellung von Beschichtungen aus MMC besteht jedoch darin, dass bei gebräuchlichen Beschichtungsverfahren, wie z.B. Sputtern oder Aufdampfen, die Ausgangsstoffe sehr fein verteilt als Schicht abgeschieden werden. Folglich liegt die Partikelgröße der nichtmetallischen Partikel weit unter einem Mikrometer. Damit die nichtmetallischen Partikel aufgrund ihrer Härte verschleißmindemd wirken können, muss ihre Größe jedoch mindestens knapp einen Mikrometer betragen.

Verfahren zur Herstellung verschleißfester Beschichtungen aus MMC sind insbesondere durch folgende Schriften bekannt.

In DE 10 2005 021 927 A1 wird ein Target für PVD-Verfahren beschrieben, das aus einem Verbundwerkstoff, bei dem als nichtmetallische Stoffe Wolframcarbid oder Titancarbid zur Anwendung kommen, besteht. Mit diesem Target sollen besonders durch Lichtbogenverdampfen abriebfeste MMC-Schichten hergestellt werden können.

Ein Verfahren zur Herstellung verschleißfester Schichten auf Substraten aus Aluminiumlegierungen wird in EP 0 221 276 B1 vorgestellt, bei dem auf die Substrate ein Pulvergemisch aus einem Metallcarbid, wie z.B. Titancarbid, Wolframcarbid oder Molybdäncarbid, und aus einem Metallpulver aufgebracht wird. Dieses enthält Silizium und ein weiteres Metall, das intermetallische Verbindungen mit Silizium bildet. Das Pulver wird zusammen mit einer Oberflächenlage des Substrats mittels Lasereinstrahlung zu einer dünnen Verbundschicht verschmolzen.

Aus EP 0 622 476 B1 ist ein Verfahren zur laserinduzierten Beschichtung von Metallsubstraten mit MMC bekannt, bei dem Pulver, das im Wesentlichen dieselbe Zusammensetzung wie die herzustellende Beschichtung hat, auf das zu beschichtende Substrat gesprüht wird, wobei das Pulver auf seiner Flugbahn einen Laserstrahl durchläuft, der auf die Auftreff-Fläche des Pulvers gerichtet ist. Beim Auftreffen wird das Pulver mit der Oberfläche des Substrates verschmolzen. Die Beschichtung größerer Substratflächen wird durch eine Bewegung des Substrates relativ zum Pulverstrom/Laserstrahl erreicht. Es wird vorgeschlagen, Werkstoffe aus Aluminium oder Aluminiumlegierungen (z.B. AISi) mit einer 200 µm bis 3 mm dicken MMC-Beschichtung zu versehen, die aus einer AlSi-Matrix mit einem Siliziumanteil zwischen 20 und 50 Gew.-% sowie aus 1 und 40 Gew.-% SiC-Partikeln einer Korngröße zwischen 5 und 100 µm besteht.

Die Härten und Verschleißfestigkeiten der nach den oben beschriebenen Verfahren hergestellten Schichten sind zwar schon vergleichsweise hoch, bei bestimmten Anwendungen sind jedoch noch höhere Härten und Verschleißfestigkeiten wünschenswert.

Die Aufgabe der Erfindung ist es, ein einfach durchzuführendes Verfahren zu finden, das es ermöglicht, Beschichtungen aus MMC mit einer Matrix aus Aluminium oder einer metallischen Aluminiumlegierung herzustellen, die eine wesentlich höhere Härte, Elastizität und Verschleißfestigkeit als die mit bislang bekannten Methoden hergestellten MMC-Beschichtungen aufweisen. Bauteile, die in mechanisch stark beanspruchten Bereichen mit derartigen Beschichtungen versehen sind, sollen eine erhöhte Lebensdauer erreichen.

Diese Aufgabe wird erfindungsgemäß durch die kennzeichnenden Merkmale der Ansprüche 1, 20, 21 und 22 gelöst. Weitere vorteilhafte Ausführungen und Verwendungen ergeben sich aus den Ansprüchen 2 bis 19.

Nach Maßgabe der Erfindung werden zur Herstellung der Beschichtungen aus MMC Pulver, die sich aus Aluminium oder einer Aluminiumlegierung sowie einem Anteil von 0,1 bis 30 Vol-% nichtmetallischen Partikeln zusammensetzen, in einer Dicke von 0,2 bis 5 mm auf die Beschichtungsfläche aufgebracht, anschließend die Beschichtung abgeschreckt und diese schließlich einer hinsichtlich Dauer und Temperatureinwirkung definierten Auslagerung unterzogen.

Das Abschrecken der Schichten erfolgt sofort nach Beendigung des Beschichtungsvorgangs entweder durch Eintauchen in Flüssigkeiten, wie z.B. Wasser, Öl oder flüssigen Stickstoff, oder durch Abkühlen in einem Gasstrom (z.B. mit Druckluft). Es wurde festgestellt, dass zu Beginn des Beschichtungsvorgangs die auf die Beschichtungsoberfläche treffenden Tröpfchen bzw. Partikel durch die kalte Beschichtungsoberfläche sozusagen "automatisch" abgeschreckt werden. Mit wachsender Schichtdicke erhöht sich jedoch die Temperatur der Schicht. Bei Schichtdicken ab ca. 0,1 mm zeigt deshalb ein nachträgliches Abschrecken der Schicht eine nachweisbare Wirkung; mit wachsender Schichtdicke nimmt die Wirkung des nachträglichen Abschreckens immer mehr zu.

Es ist vorgesehen, keramische Partikel aus TiB₂ oder TiC einzusetzen, die sich u. a. durch eine hohe Abriebfestigkeit und Härte auszeichnen. Beschichtungen, die mit TiB₂- bzw. TiC-Partikeln einer Korngröße von 0,8 bis 1000 µm hergestellt wurden, haben sich als besonders verschleißfest erwiesen.

In einer weiteren vorteilhaften Variante, werden Pulver eingesetzt, die Nanopartikel aus TiB₂ bzw. TiC enthalten. Die Verschleißfestigkeit der Schichten wird hier, im Gegensatz zu Schichten mit Partikeln, deren Größe im Mikrometerbereich liegt, nicht in erster Linie durch die Härte der Partikel selbst erreicht, sondern dadurch, dass die Nanopartikel eine Erhöhung der Härte des Matrixmaterials bewirken.

Als Matrixmaterialien werden bevorzugt kalt- und/oder warmaushärtbare Aluminiumlegierungen, wie z.B. das als 7075-Legierung bekannte AlZnMgCuCr, verwendet.

Die Beschichtungen werden zur Nachhärtung nach dem Abschrecken einer Kalt-, Stufen- oder Warmauslagerung unterzogen.

Bei der Kaltauslagerung werden die Beschichtungen nach dem Abschrecken für eine Zeit von 1 Minute bis 3 Tagen auf Raumtemperatur gehalten. Die Kaltauslagerung ist am einfachsten durchzuführen, da sie quasi "von selbst" erfolgt. Bei geeigneter Wahl der Komponenten und deren Anteile im MMC können dennoch beträchtliche Steigerungen der Härte und der Verschleißfestigkeit der Beschichtung erzielt werden.

Wesentlich größere Härten und Verschleißfestigkeiten werden mit einer Stufenauslagerung erreicht. Hierzu werden die Beschichtungen zuerst für eine Zeit von 1 Minute bis 3 Tagen "kalt", d.h. bei Raumtemperatur, und danach für eine Zeit von 1 Minute bis 3 Tagen bei einer Temperatur 100 bis 200°C "warm" gelagert.

Durch die Warmauslagerung, bei der die Beschichtung direkt nach dem Abschrecken für eine Zeit von 1 Minute bis 3 Tagen bei einer Temperatur 100 bis 200°C gelagert wird, können bereits nach kurzen Zeiten von typischerweise wenigen Stunden Härten und Verschleißfestigkeiten erzielt werden, die höher als die bei der Kaltauslagerung, jedoch geringer als die bei der Stufenauslagerung erreichten, sind.

Beschichtungen für besonders stark beanspruchte Teile, wie z.B. für Sägedrähte oder-bänder, die neben abrasiven Beanspruchungen auch starken Biegebelastungen unterworfen sind, werden vor dem Abschrecken zusätzlich für 1 Minute bis 4 Stunden bei 350 Grad bis 500 Grad homogenisiert. Dadurch erreichen die Beschichtungen größere Härten, da in diesen einerseits Spannungen und Fehlstellen abgebaut werden und andererseits eine Homogenisierung der Komponenten erfolgt. Außerdem können sich aufgrund von Diffusion an der Phasengrenze Substrat/Beschichtung Legierungen bilden, die eine Erhöhung der Härte der Phasengrenzschicht und somit eine bessere Haftung der Beschichtung bewirken.

Es wurde überraschend gefunden, dass durch den Einsatz von TiB₂- und TiC-Partikeln und von thermisch aushärtbaren Aluminiumlegierungen als Matrixmaterial einerseits die erforderlichen Auslagerungszeiten gegenüber denen der reinen Legierungen wesentlich verkürzt werden können und andererseits die Härte des Matrixmaterials nachhaltig erhöht wird, wobei die Härte des Matrixmaterials, das im direkten Kontakt mit den Partikeln steht, am größten ist. Mit zunehmendem Abstand zu den Partikeln verringert sich die Härte des Matrixmaterials und erreicht schließlich die Härte des Matrixmaterials ohne Partikel.

Mit TiB₂-Partikeln kann die erforderliche Auslagerungszeit stärker verkürzt und auch die Härte des Matrixmaterials weiter erhöht werden als mit TiC-Partikeln. Deshalb ist es vorgesehen bevorzugt TiB₂-Partikel einzusetzen. Allerdings sind TiC-Partikel härter, sodass bei bestimmten Anwendungen auch ein Einsatz von TiC-Partikeln angezeigt sein kann.

Obwohl reines Aluminium als nicht aushärtbar gilt, bewirken die TiB₂- und TiC-Partikel auch bei diesem durch sog. Kornfeinung (Verringerung der Korngröße) eine, wenn auch wesentlich geringere, Erhöhung der Härte.

Da die Härte des Matrixmaterials in der Nähe der TiB₂- bzw. TiC-Partikel am größten ist, ist die mittlere Härte des Matrixmaterials umso höher, je mehr Partikel im MMC enthalten sind. Aus geometrischen Gründen nimmt jedoch die Stabilität der Aluminiummatrix mit steigendem Anteil der Partikel ab, da immer weniger Partikel vollständig von einer hinreichend dicken Schicht des Matrixmaterials umgeben sind. Die höchsten Verschleißfestigkeiten werden deshalb bei einem Anteil der Partikel von 10-30 Vol-% erreicht.

Mit dem erfindungsgemäßen Verfahren können also, insbesondere unter Verwendung von kalt- und/oder warmaushärtbaren Legierungen (z.B. AlZnMgCuCr) als Matrixmaterial und 10-20 Vol.-% TiB₂-Partikeln, MMC-Schichten hergestellt werden, die aufgrund der höheren Härte des Matrixmaterials wesentlich verschleißfester sind als Schichten, die mit bislang bekannten Verfahren hergestellt wurden.

Zur Beschichtung können alle Methoden eingesetzt werden, bei denen Pulver aus Metall und nichtmetallischen Partikeln als Ausgangsstoff verwendet werden und bei denen die Größe der nichtmetallischen Partikel durch den Beschichtungsvorgang nicht wesentlich verringert wird. Dies wird dadurch erreicht, dass beim Beschichten ausschließlich das Matrixmaterial aufgeschmolzen wird und die Partikel im festen Zustand eingebettet werden. Oder es werden sowohl das Matrixmaterial als auch die Partikel geschmolzen und diese in Form von feinen Tröpfchen abgeschieden.

Die Pulver werden durch Verdüsen von MMC mit Stickstoff gewonnen. Als Alternative können Pulvermischungen aus Metall und Keramik eingesetzt werden, die noch nicht legiert, sondern lediglich mechanisch vermischt sind.

Geeignet sind die an sich bekannten Methoden des Plasma- und des Laserbeschichtens sowie mikrometallurgische Beschichtungsmethoden. Dabei sind jedoch die Prozessparameter so einzustellen, dass die nichtmetallischen Partikel höchstens geschmolzen, jedoch nicht verdampft werden.

Das Beschichten kann auch mittels Laserlöten erfolgen. Hierzu wird das Substrat zuerst mit einem Metall, wie z.B. Nickel, oder einer Metalliegierung beschichtet. Anschließend wird das Pulver auf die metallische Schicht aufgebracht und flächig mit dieser verschmolzen. Das Metall/die Metalllegierung dient als Lot, das die Beschichtung mit dem Substrat verbindet.

Um eine gute Haftung der MMC-Beschichtungen zu gewährleisten, ist es vorgesehen, dass die Beschichtungsfläche vor dem Aufbringen der Beschichtung, z.B. durch Sandstrahlen oder Mikrostrukturfräsen, aufgeraut bzw. aktiviert wird.

In einer weiteren Ausführung des Verfahrens werden mehrere dünne MMC-Schichten, die jeweils unterschiedliche Zusammensetzungen des Matrixmaterials und/oder unterschiedliche Konzentrationen der nichtmetallischen Partikel aufweisen, übereinander aufgetragen. Hierdurch ist es möglich, Beschichtungen zu erzeugen, deren Härte bezogen auf ihren Querschnitt einen graduierten Verlauf zeigt.

Auf diese Weise kann z.B. ein Aluminiumbauteil so mit MMC beschichtet werden, dass die MMC-Schicht an der Grenzfläche zum Bauteil weicher ist, jedoch besser haftet, während die andere Seite der Schicht eine größere Härte und Verschleißfestigkeit besitzt. Denkbar ist es andererseits auch eine MMC-Schicht herzustellen, die nach außen hin "weicher" wird, um günstigere Gleiteigenschaften zu erhalten.

Zudem können derart erzeugte Schichten als haftvermittelnde Zwischenschicht eingesetzt sein. Es hat sich nämlich gezeigt, dass die MMC-Schichten auf Aluminium sehr gut haften, während sie selbst einen Untergrund bilden, auf dem Titan-Schichten sehr gut haften. Auf diese Weise können Aluminiumstrukturen, deren Anwendung sich üblicherweise für medizinische Zwecke verbietet, durch die jetzt mögliche Beschichtung mit Titan vorteilhafte Anwendungen, z.B. als Implantate oder als mikrotechnologisches Trägermaterial, finden. In analoger Weise können MMC-Beschichtungen auch als Haftvermittler zwischen Aluminiumteilen und Keramikbeschichtungen eingesetzt werden.

Die Erfindung wird nachfolgend anhand zweier Ausführungsbeispiele näher erläutert; hierzu zeigen im seitlichen Schnitt:
- Fig. 1:: ein plattenförmiges Prägewerkzeug mit beschichteter Prägefläche,
- Fig. 2:: eine Führungs- und Transportwalze mit beschichteter Lauffläche.

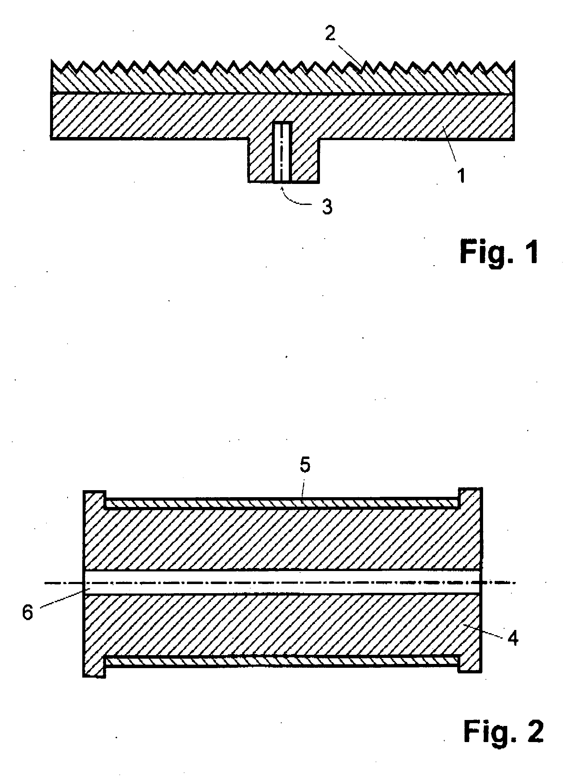

In Fig. 1 ist ein Prägewerkzeug dargestellt, das aus dem plattenförmigen Prägekörper 1 besteht, der an seiner Oberseite mit einer verschleißfesten MMC-Beschichtung 2, in die das Prägemuster eingearbeitet ist, und an seiner Unterseite mit dem Gewindeanschluss 3 versehen ist. Das MMC der Schicht 2 ist mit dem erfindungsgemäßen Verfahren hergestellt und besteht aus Aluminium mit 12% Silizium und 10 Vol.-% TiB₂.

Die Schicht 2 zeichnet sich durch einen Elastizitätsmodul von 100 GPa sowie eine Zugfestigkeit von 700 MPa aus. Durch die hohe Festigkeit des MMC einerseits und die Härte der eingebetteten TiB₂-Partikel andererseits wird eine lange Lebensdauer des Prägewerkzeugs sichergestellt.

Fig. 2 zeigt eine Führungs- und Transportwalze, die aus dem Walzenkörper 4, dessen Lauffläche mit der MMC-Schicht 5 belegt ist, besteht. Der Walzenkörper 4 ist mit dem Durchgangsloch 6 versehen, das der Aufnahme einer Achse dient. Das MMC der Schicht 5 besteht aus AlMg und 15 Vol.-% TiC.

Die Schicht 5 besitzt einen Elastizitätsmodul von 100 GPa sowie eine Zugfestigkeit von 700 MPa, sodass sich in Zusammenwirkung mit der hohen Härte der TiC-Partikel die Lauffläche der Walze durch eine sehr hohe Abriebfestigkeit auszeichnet.

### Liste der verwendeten Bezugszeichen

- 1: Prägekörper
- 2: Beschichtung (Prägefläche)
- 3: Gewindeanschluss
- 4: Walzenkörper
- 5: Beschichtung (Lauffläche)
- 6: Durchgangsloch

## Patentansprüche

1. Verfahren zur Herstellung von Beschichtungen aus MMC, bei dem aus Aluminium oder einer Aluminiumlegierung und aus 0,1 bis 30 Vol.-% nichtmetallischen Partikeln bestehende Pulver auf die Beschichtungsfläche aufgebracht werden, **dadurch gekennzeichnet, dass** die aus dem Pulver erzeugte 0,1 bis 5 mm dicke Schicht abgeschreckt und anschließend einer Kaltauslagerung für 1 Minute bis 3 Tage bei Raumtemperatur oder einer Stufenauslagerung, bei der die Beschichtung zuerst für 1 Minute bis 3 Tage kalt und anschließend für 1 Minute bis 3 Tage bei 100 bis 200°C warm ausgelagert wird, oder einer Warmauslagerung für 1 Minute bis 3 Tagen bei 100 bis 200°C unterzogen wird.

2. Verfahren nach Anspruch 1, **dadurch gekennzeichnet, dass** die Beschichtung vor dem Abschrecken für 1 Minute bis 4 Stunden bei 350 bis 500 °C homogenisiert wird.

3. Verfahren nach Anspruch 1, **dadurch gekennzeichnet, dass** die verwendeten nichtmetallischen Partikel aus TiB₂ oder TiC bestehen.

4. Verfahren nach Anspruch 1 bis 4, **dadurch gekennzeichnet, dass** Pulver eingesetzt werden, bei denen die Korngröße der TiB₂- bzw. der TiC-Partikel 0,8 bis 1000 µm beträgt oder die Nanopartikel aus TiB₂ bzw. TiC enthalten.

5. Verfahren nach Anspruch 1 bis 6, **dadurch gekennzeichnet, dass** die Pulver eine kalt- und/oder warmaushärtbare Aluminiumlegierung, beispielsweise AlZnMgCuCr oder AlZnMgCuCr und 10-20 Vol.-% TiB₂, enthalten.

6. Verfahren nach Anspruch 1 bis 9, **dadurch gekennzeichnet, dass** das Aufbringen der Schicht durch Plasma-, Laserbeschichten oder schmelzmetallurgisch erfolgt.

7. Verfahren nach Anspruch 1 bis 9, **dadurch gekennzeichnet, dass** das Aufbringen der Schicht mittels Laserlöten erfolgt, indem das Werkstück zuerst mit einem Metall oder einer Metalliegierung beschichtet, auf die metallische Schicht das Pulver aufgebracht und schließlich das Pulver mit einem Laser flächig mit dem als Lot dienenden Metall/der als Lot dienenden Metalllegierung verschmolzen wird, wobei beispielsweise Nickel als Lot eingesetzt wird.

8. Verfahren nach Anspruch 1 bis 14, **dadurch gekennzeichnet, dass** vor Aufbringen der Schicht die Beschichtungsfläche aktiviert wird, beispielsweise durch Sandstrahlen.

9. Verfahren nach Anspruch 1 bis 15, **dadurch gekennzeichnet, dass** durch das Auftragen mehrerer dünner MMC-Schichten übereinander, die jeweils unterschiedliche Zusammensetzungen des Matrixmaterials und/oder unterschiedliche Konzentrationen der nichtmetallischen Partikel aufweisen, eine Oberflächenbeschichtung mit einem längs der Dicke der Schicht graduierten Verlauf der Härte hergestellt wird.

10. Verwendung des Verfahrens nach Anspruch 1 bis 16 zur Erzeugung einer haftvermittelnden Schicht, die zwischen einem Körper aus Aluminium oder aus einer Aluminiumlegierung sowie einer Beschichtung aus Titan und/oder Keramik liegt.

11. Verwendung eines mit dem Verfahren nach Anspruch 17 beschichteten Körpers als lmplantat.

12. Verwendung eines mit dem Verfahren nach Anspruch 17 beschichteten Körpers als mikrotechnologisches Trägermaterial.

13. Platten- oder walzenförmiges Prägewerkzeug mit einer nach einem der vorangehenden Verfahrensansprüche beschichteten Prägeoberfläche, **dadurch gekennzeichnet, dass** die Beschichtung (2) aus MMC, dessen Matrix aus Aluminium mit 12% Silizium besteht und dessen nichtmetallischen Partikel 10 Vol.-% TiB₂ sind, gebildet ist.

14. Führungs- und/oder Transportwalze mit einer nach einem der vorangehenden Verfahrensansprüche beschichteten Mantelfläche, **dadurch gekennzeichnet, dass** die Beschichtung (5) aus MMC, dessen Matrix aus AIMg besteht und dessen nichtmetallische Partikel 15% Vol.-% TiC sind, gebildet ist.

15. Sägedraht, Sägeband mit einer nach Patentanspruch 2 beschichteten Draht- oder Bandoberfläche, **dadurch gekennzeichnet, dass** die Beschichtung vor dem Abschrecken mittels Wärmebehandlung homogenisiert ist,
